# EUROPÄISCHE PATENTSCHRIFT

(11) **EP 1 604 888 B1**
(45) Veröffentlichungstag und Bekanntmachung des Hinweises auf die Patenterteilung: **12.08.2009**
(21) Anmeldenummer: 05012310.8
(22) Anmeldetag: 08.06.2005
(51) Int. Cl.: B62D 65/18, B60P 3/08, B60P 1/64, B65D 19/44

(54) **Verfahren zum Transport von Lenk- und Antriebseinheiten sowie Anordnung von Transporthilfsmitteln zu deren Transport auf einem Transportfahrzeug**
Method and device to transport steering and drive train units on a transporter vehicle
Procédé et dispositif pour le transport d'unités d'entraînement et de direction sur un véhicule de transport

(30) Priorität: 12.06.2004 DE 102004028541
(43) Veröffentlichungstag der Anmeldung: 14.12.2005
(73) Patentinhaber: BPW Italia s.r.l., 37135 Verona (IT)
(72) Erfinder: Rhein, Bernd, 51491 Overath (DE); Sironi, Massimo, 37012 Bussolengo (VR) (IT); Beltrami, Stefano, 37124 Verona (IT)
(74) Vertreter: Christophersen, Ulrich Rudolf

(56) Entgegenhaltungen:
- WO-A-02/051722
- DE-A1- 4 447 560
- DE-U- 20 214 245
- GB-A- 466 214
- NL-C- 1 012 102
- US-A- 2 119 193
- US-A1- 2003 150 757

## Beschreibung

Die Erfindung betrifft ein Verfahren zum Transport einer Mehrzahl frontgetriebener Spezialfahrzeuge auf einem gemeinsamen Transportfahrzeug und in Anordnung quer zur Fahrtrichtung des Transportfahrzeugs. Die Erfindung betrifft ferner eine Anordnung von Transporthilfsmitteln zum Transport mehrerer Gegenstände auf einem gemeinsamen Transportfahrzeug, wobei die einzelnen Transporthilfsmittel rechteckige Paletten mit zwei Längs- und zwei Querrändern sind.

Für die Produktion von Kraftfahrzeugen mit Sonderaufbauten wie z.B. Wohnmobilen werden von den Fahrzeugherstellern Rohfahrzeuge ausgeliefert. Diese werden dann vom jeweiligen Fahrzeugbauer mit dem gewünschten Aufbau wie z.B. dem Wohnmodul versehen. Die vom Fahrzeughersteller bereitgestellten Rohfahrzeuge bestehen im Wesentlichen aus einer Lenkund Antriebseinheit, an welche sich eine Aufbauplattform mit einer nicht angetriebenen Hinterachse anschließt. Üblicherweise werden zwei verschiedene Varianten der Lenk- und Antriebseinheit angeboten. Bei der ersten Variante befinden sich die Fahrerkabine und deren Verkleidung bereits in dem Zustand, in welchem sie später an die Kunden ausgeliefert wird. Bei der zweiten Variante, den sogenannten Windlauf-Versionen, ist die Fahrerkabine nicht oder nur unvollständig montiert.

Vor allem für die Produktion von Wohnmobilen ist es seitens der Fahrzeugbauer häufig gewünscht, anstelle des herstellerseitig angebotenen Aufbauchassis mit Hinterachse hierfür eigene Baugruppen zu verwenden, die häufig besser den individuellen Kundenanforderungen entsprechen. So ist bei Wohnmobilen zur Vergrößerung des Innenraums oft ein sehr tief über der Fahrbahn liegendes Chassis wünschenswert, wohingegen sich bei anderen Sonderfahrzeugen wiederum andere Kundenanforderungen an das Fahrzeugchassis ergeben können. Für solche Anwendungen hat es sich daher als wirtschaftlich erwiesen, Antriebs- und Lenkeinheiten bereits beim Fahrzeughersteller vom übrigen Aufbauchassis zu trennen und insofern als rudimentäres Fahrzeug, wie es zum Beispiel in der DE 202 14 245 U1 beschrieben ist, an den weiterverarbeitenden Hersteller zu liefern. Dieser ergänzt das Fahrzeug durch ein Sonderchassis mit entsprechender Hinterachse. Erst dann gelangt das Fahrzeug zum Fahrzeugbauer, z.B. einem Wohnmobilhersteller. Dort wird das Fahrzeug dann mit den spezifischen Baugruppen ergänzt.

Zum Zwecke des Transports derartiger Lenk- und Antriebseinheiten zum weiterverarbeitenden Hersteller ist es aus der EP 0 308 574 B1 bekannt, jeweils zwei Lenkund Antriebseinheiten nach der Trennung vom übrigen Rohfahrzeug mit ihren rückwärtigen Enden fest und fahrtauglich miteinander zu verbinden. Die so entstandenen Tandemfahrzeuge sind von einer der Lenk- und Antriebseinheiten aus fahrbar, weshalb es möglich ist, mehrere so gebildete Tandemfahzeuge längs auf einen gemeinsamen Fahrzeugtransporter herauf zu fahren, um diese dann gemeinsam zum Kunden, d.h. dem Fahrzeugbauer, zu transportieren.

Beim Transport der aus der EP 0 308 574 B1 bekannten, verbundenen Lenk- und Antriebseinheiten hat es sich als nachteilig erwiesen, dass die Größe der Ladefläche des die Tandemfahrzeuge transportierenden Transportfahrzeuges nur unzureichend ausgenutzt wird. Da die in Fahrtrichtung des Transportfahrzeugs auf dieses hinauf gefahrenen Lenk- und Antriebseinheiten bzw. die aus ihnen gebildeten Tandemfahrzeuge deutlich schmaler sind als die Ladefläche des Transportfahrzeugs, bleibt ein erheblicher Teil der Ladefläche ungenutzt. Üblicher weise weisen die Tandemfahrzeuge bei eingeklappten Außenspiegeln eine Breite von ca. 2,10 m auf, wohingegen die Breite von Schwerkraft-LKW ca. 2,5 m beträgt, so dass zu beiden Seiten der Tandemfahrzeuge ein ungenutzter Ladeflächenstreifen von 0,2 m verbleibt. Bereits hierdurch gehen in etwa 20% der Ladefläche verloren. Hinzu kommen je nach Transportfahrzeugtyp unterschiedlich große Verluste an Ladefläche durch die Länge der Tandemfahrzeuge, die in etwa 4,6 m beträgt. Die Ladefläche eines üblichen Sattelaufliegers weist eine Länge von ca. 13,5 m auf, so dass nur zwei Tandemfahrzeuge, also vier Lenk- und Antriebseinheiten auf der Ladefläche untergebracht werden können.

Weitere Nachteile ergeben sich daraus, dass für den Transport der Tandemfahrzeuge wiederum Spezialfahrzeuge eingesetzt werden müssen, nämlich Fahrzeugtransporter. Ferner kann immer nur eine geradzahlige Anzahl von Fahrzeugen zum Kunden transportiert werden.

Es ist bekannt, mehrachsige Fahrzeuge in einer Anordnung quer zur Fahrtrichtung auf einem Transportfahrzeug gemeinsam zu transportieren. Die DE 44 47 560 A1 und ähnlich auch die US 2003/0150757 A1 beschreiben den Transport von Motorrädern, deren Gesamtlänge bekanntlich so gering ist, dass eine Anordnung quer zur Fahrtrichtung auf einem Schwerkraft-Lkw mit der üblichen Breite von ca. 2,50 m keine Schwierigkeiten bereiten würde. Hingegen sieht die WO 02/051722 A1 den Transport deutlich größerer Pkw vor. Realisierbar ist dies nur beim Einsatz überbreiter Transportfahrzeuge von ca. 5 m Breite. Ein derartiger Transport ist auf öffentlichen Straßen nur mit behördlicher Sondererlaubnis zulässig. Kraftfahrzeuge mit Sonderaufbauten wie z. B. Wohnmobile sind noch länger, als die in der WO 02/051722 A1 beschriebenen Personenkraftwagen .

Es ist daher eine Aufgabe der Erfindung, ein Verfahren wie auch eine Anordnung von Transporthilfsmitteln der jeweils eingangs genannten Art bereitzustellen, durch welches / welche die Ausnutzung der Ladefläche eines herkömmlichen Transportfahrzeuges verbessert und so die Transportkosten gesenkt werden können.

Zur Lösung der Aufgabe wird ein Verfahren mit den Merkmalen des Anspruchs 1 vorgeschlagen.

Der Transport der Antriebs- und Lenkeinheiten quer zur Fahrtrichtung des Transportfahrzeugs erlaubt eine deutlich verbesserte Ausnutzung der Ladefläche, da die Maße der Lenk- und Antriebseinheiten bei dieser Ausrichtung in etwa der Breite der Ladefläche üblicher Schwerkraft-LKW entsprechen, weshalb nur geringe Ladeflächenverluste entstehen. Um einen sicheren Transport der Lenk- und Antriebseinheiten zu gewährleisten, ist es von Vorteil, daß sich diese einerseits über ihre Achse und andererseits über mindestens eine weitere Abstützung abstützen.

In vorteilhafter Ausgestaltung des Erfindungsgedankens wird vorgeschlagen, daß die Lenk-und Antriebseinheiten auf einem Transporthilfsmittel wie z.B. einer Transportpalette abgestützt transportiert werden. Auf diese Weise lassen sich die Lenk- und Antriebseinheiten in gesicherter Position auf das Transportfahrzeug hinauf oder von diesem herunter befördern.

Darüber hinaus ist es von Vorteil, wenn die Lenk- und Antriebseinheiten über Sicherungselemente sowie durch die Abstützung auf den Transporthilfsmitteln gegen z. B. ein Verrutschen oder ein Verkippen gesichert werden.

In besonders vorteilhafter Ausgestaltung wird vorgeschlagen, daß zum Be- und Entladen des Transportfahrzeugs die Lenk- und Antriebseinheiten in im wesentlichen quer zur Fahrtrichtung des Transportfahrzeugs verlaufender Richtung auf die Transportebene des Transportfahrzeugs bzw. davon herunter befördert werden. Durch diese Art des Be- und Entladens kann auf einfache Weise von der Seite her auf die Lenk- und Antriebseinheiten zugegriffen werden. Dabei ist es ferner von Vorteil, wenn die Lenk- und Antriebseinheiten durch Gabelstapler, welche die Transportmittel zumindest teilweise untergreifen, auf die Transportebene bzw. davon herunter befördert werden. Derartige Gabelstapler sind am Standort des Fahrzeugbauers ohnehin verfügbar und verursachen daher keinerlei zusätzliche Kosten.

Weiter ist es von Vorteil, wenn die Lenk- und Antriebseinheiten in einer unteren sowie maximal einer weiteren oberen Transportebene transportiert werden. Zum Transport in zwei übereinander liegenden Transportebenen eignen sich vor allem die so genannten Windlauf-Versionen der Lenk- und Antriebseinheiten. Bei diesen sind die Fahrerkabinen nicht oder nur unvollständig montiert, wodurch die maximale Höhe deutlich geringer ist als bei üblichen Antriebs- und Lenkeinheiten mit vollständiger Fahrerkabine. Aufgrund dieser geringen Höhe ist es möglich, die Windlauf-Versionen in zwei vertikal übereinander liegenden Transportebenen unter Beachtung der maximalen Transporthöhe von in etwa drei Metern zu transportieren. Auf diese Weise läßt sich die Zahl der zu transportierenden Lenk- und Antriebseinheiten im Fall von Windlauf-Versionen verdoppeln.

Die untere Transportebene wird vorteilhafterweise durch die Ladefläche des Transportfahrzeugs gebildet. Die obere Transportebene wird hingegen in vorteilhafter Ausgestaltung durch auf die Transporthilfsmittel der unteren Transportebene aufsetzbare Zwischenteile gebildet. Mit diesen Ausgestaltungen ist es zum einen möglich, übliche Ladeflächen von zum Beispiel Sattelaufliegern als untere Transportebene zu nutzen. Ferner ist es auch möglich, die in der unteren sowie der oberen Transportebene auf Transporthilfsmitteln transportierten Lenk- und Antriebseinheiten unter Verwendung baugleicher Transporthilfsmittel zu transportieren, wodurch sich ebenfalls Kosten sparen lassen.

Darüber hinaus wird zur **Lösung** der Aufgabe eine Anordnung der eingangs genannten Art vorgeschlagen, die dadurch gekennzeichnet ist, daß für den Transport von Lenk- und Antriebseinheiten frontgetriebener Spezialkraftfahrzeuge die Paletten einer Transportebene ausschließlich hintereinander auf der Transportebene des Transportfahrzeuges angeordnet sind, wobei sich ihre Längsränder quer zur Transportrichtung erstrecken, und daß jede Palette mit ersten und zweiten Abstützungen versehen ist, wobei die ersten Abstützungen, jeweils an den Längsrändern der Palette angeordnet die Antriebsachse der Lenk- und Antriebseinheit stützen, und die zweite Abstützung eine zusätzliche in Palettenlängsrichtung zur ersten Abstützung beabstandete Abstützung ist.

Durch diese Anordnung der Transporthilfsmittel wird die Ladefläche des Transportfahrzeugs sehr gut ausgenutzt, wodurch sich viele einzelne Lenk- und Antriebseinheiten auf einem gemeinsamen Transportfahrzeug unterbringen und so Transportkosten senken lassen. Da jede Palette mit ersten und zweiten, in Palettenlängsrichtung zueinander beabstandeten Abstützungen versehen ist, sind die Lenk- und Antriebseinheiten während des gesamten Transports zuverlässig gegen Verrutschen und Verkippen gesichert.

In vorteilhafter Ausgestaltung werden an der Palette ausgebildete Sicherungselemente und Einschuböffnungen für z. B. Gabelstapler vorgeschlagen. Hierdurch wird zum einen der Zugriff von Handhabungsmitteln wie beispielsweise Gabelstaplern auf die mit den Lenk- und Antriebseinheiten beladenen Paletten ermöglicht. Zum anderen werden durch die an den Paletten ausgebildeten Sicherungselemente die Lenk- und Antriebseinheiten bei Kurvenfahrt gegen ein Verrutschen oder Verkippen um die Antriebsachse gesichert.

In vorteilhafter Ausgestaltung verhindern die Sicherungselemente Bewegungen der Lenk-und Antriebseinheit parallel zu den Längsrändern der Palette. Von Vorteil ist es ferner wenn die Sicherungselemente einen Spanngurt sowie mindestens eine Lagesicherung umfassen. Diese Lagesicherung ist in vorteilhafter Ausgestaltung eine Vertiefung im Bereich des Längsrandes der Palette, oder es werden zusätzliche Keile verwendet. Durch diese Ausgestaltungen erfolgt die Lagesicherung der Lenk- und Antriebseinheiten auf einfache, zuverlässige und kostengünstige Art und Weise.

Darüber hinaus wird vorgeschlagen, daß die Abstützung durch eine starre, sowohl mit der Lenk- und Antriebseinheit wie auch mit der Palette verbundene Stütze gebildet wird, auf der sich die Lenk- und Antriebseinheit mit ihrem rückwärtigen Ende abstützt. Durch diese Ausgestaltung wird eine horizontale Ausrichtung der Lenk- und Antriebseinheit während des Transports sichergestellt. Die Stütze bildet dabei eine zusätzliche Abstützung.

Bei einer weiteren Ausgestaltung ist die Palette mit Rollen versehen. Mit Hilfe dieser Rollen läßt sich die Palette beispielsweise zu Lager- und Kommissionierzwecken, verfahren, eventuell sogar von Hand.

Darüber hinaus wird vorgeschlagen, daß die Rollen zwischen einer Rollstellung und mindestens einer weiteren Stellung verschwenkbar sind, in welcher die Rollen nicht in Kontakt mit dem Untergrund stehen. In der Rollstellung können die Paletten durch Handbetätigung bewegt werden. In der zweiten Stellung, in welcher die Rollen nicht in Kontakt mit dem Untergrund stehen, werden die Paletten auf die Lagerfläche des Transportfahrzeugs aufgesetzt, so daß dort ein Rollen der Paletten verhindert wird.

Darüber hinaus wird vorgeschlagen, daß die Palette mit zwei deren Querränder durchsetzenden Einschuböffnungen versehen ist, in welche die Gabel des Gabelstaplers einschiebbar ist. Dadurch wird ein Beladen des Transportfahrzeugs von der Seite her ermöglicht. Darüber hinaus ist es von Vorteil, wenn die Palette mit zwei deren Längsränder durchsetzenden Einschuböffnungen versehen ist, in welche die Gabel des Gabelstaplers einschiebbar ist. In diese Einschuböffnungen kann die Gabel des Gabelstaplers z. B. zu Lager- und Kommissionierzwecken eingeschoben werden.

Vorteilhaft erstrecken sich die Einschuböffnungen im wesentlichen symmetrisch zu beiden Seiten des Schwerpunktes der aus Transporthilfsmittel sowie Lenk- und Antriebseinheit zusammengesetzten Einheit. Hierdurch werden die beiden Gabeln des Gabelstaplers gleichermaßen stark belastet, und Kippmomente vermieden.

Mit einer besonders vorteilhaften Ausgestaltung wird vorgeschlagen, daß durch Aufsetzen eines aus vier Stützen bestehenden Zwischenteils auf die in der unteren Transportebene befindlichen Transporthilfsmittel eine obere Transportebene zur Aufnahme weiterer, gleichartiger Transporthilfsmittel gebildet wird. Diese Zwischenteile dienen als Distanzstücke zwischen den Transporthilfsmitteln der unteren und der oberen Transportebene. Die Zwischenteile können mit Ausnehmungen versehen sein, die mit Vorsprüngen der Transporthilfsmittel korrespondieren, wodurch die Zwischenteile mit geringem Montageaufwand auf den Transporthilfsmitteln befestigbar sind.

Weitere Merkmale und Vorteile der Erfindung ergeben sich anhand der folgenden Beschreibung von Ausführungsbeispielen. Die zugehörigen Zeichnungen zeigen in
- Fig. 1: ein Rohfahrzeug in einer Seitenansicht,
- Fig. 2: ein Rohfahrzeug in einer Draufsicht,
- Fig. 3: einen mit Lenk- und Antriebseinheiten beladenen Sattelauflieger in Seiten- und rückwärtiger Ansicht,
- Fig. 4: einen aus Zugfahrzeug und Anhänger bestehenden, mit Lenk- und Antriebseinheiten beladenen Schwerlast-Lkw in rückwärtiger und in Seitenansicht,
- Fig. 5: das in Fig. 3 dargestellte Fahrzeug, jedoch im Falle des Transports von Windlauf-Versionen der Lenk- und Antriebseinheiten,
- Fig. 6: das in Fig. 4 dargestellte Transportfahrzeug, jedoch im Falle des Transports von Windlauf-Versionen,
- Fig. 7-9: verschiedene Ausführungsformen von Transporthilfsmitteln mit darauf gelagerten Lenk- und Transporteinheiten jeweils in zwei Ansichten,
- Fig. 10: die Anordnung von Windlauf-Versionen in einer rückwärtigen Darstellung,
- Fig. 11: eine Seitenansicht zu Fig. 10,
- Fig. 12: eine alternative Anordnung von Windlauf-Versionen,
- Fig. 13: eine Seitenansicht zu Fig. 12 und
- Fig. 14: eine Draufsicht zu Fig. 12.

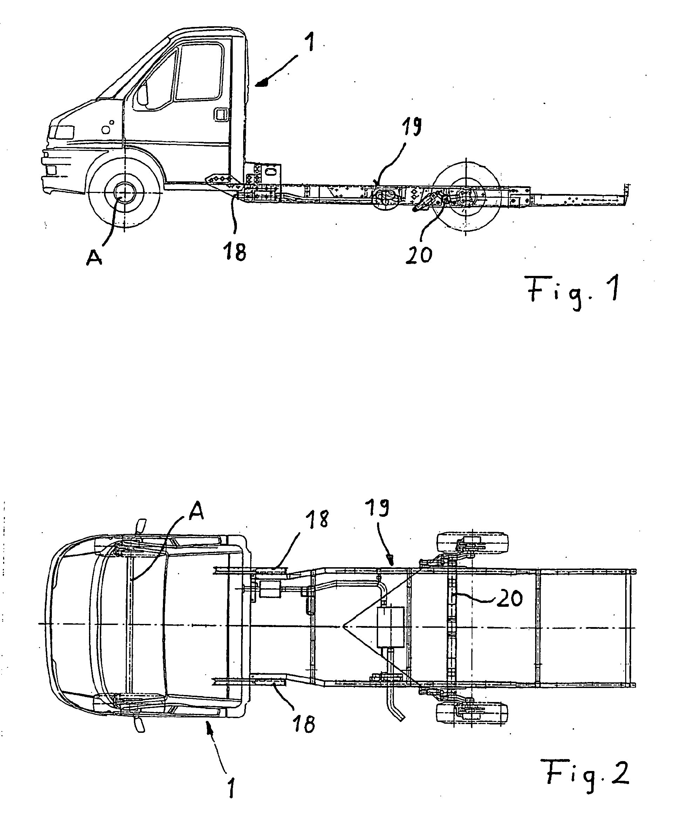

In den Fign. 1 und 2 ist ein aus einer vorne angeordneten Antriebs- und Lenkeinheit 1 und einer dahinter angeordneten Aufbauplattform 19 mit einer nicht angetriebenen Achse 20 gebildetes Rohfahrzeug dargestellt. Wie Fig. 2 am besten erkennen läßt, kann die Antriebs-und Lenkeinheit 1 gemeinsam mit einem kurzen Längsträgerstück 18 vom übrigen Rohfahrzeug getrennt und statt dessen beim Fahrzeugbauer mit einem den Kundenwünschen entsprechenden Chassis und entsprechenden Achsen ausgestattet werden.

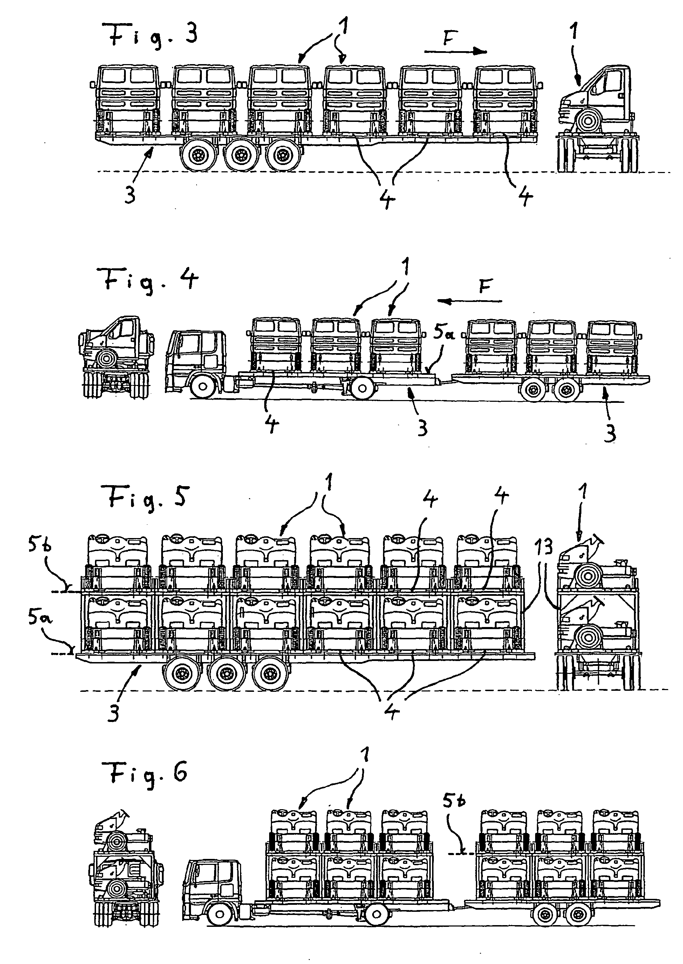

In den Fign. 3 und 4 sind die solcherart vom übrigen Rohfahrzeug getrennten Lenk- und Antriebseinheiten 1 mit entsprechenden Transporthilfsmitteln 4 auf der Ladefläche eines Transportfahrzeugs 3 dargestellt. Wie gut zu erkennen ist, nutzen die quer zur Fahrtrichtung F des Transportfahrzeuges 3 verladenen Antriebs- und Lenkeinheiten 1 die Ladefläche des Transportfahrzeugs 3 optimal aus. Sollte dies wegen einer ungünstigen Gewichtsverteilung der Antriebs- und Lenkeinheiten 1 erforderlich sein, so können diese auch abwechselnd um jeweils 180° gegeneinander gedreht auf dem Transportfahrzeug angeordnet werden. Hierdurch läßt sich eine zusätzliche Reduzierung der erforderlichen Ladefläche erzielen, da sich die Außenspiegel benachbarter Lenk- und Antriebseinheiten 1 auf diese Weise nicht fluchtend gegenüberstehen, sondern zueinander versetzt sind.

In den Fign. 5 und 6 ist eine Anordnung zum Transport von Windlauf-Versionen der Antriebs-und Lenkeinheiten 1 dargestellt. Es ist zu erkennen, daß die flach und eben gestaltete Ladefläche des Transportfahrzeugs 3 eine erste, untere Transportebene 5a bildet. Auf die auf der unteren Transportebene aufliegenden Transporthilfsmittel 4 werden vertikale Zwischenstücke bzw. Stützen 13 aufgesteckt, die eine zweite, obere Transportebene 5b tragen, auf welcher sich eine weitere Lage Lenk- und Antriebseinheiten 1 auf entsprechenden Transporthilfsmitteln 4 befindet. Mit Hilfe dieser Anordnung läßt sich die Anzahl der auf einem gemeinsamen Transportfahrzeug 3 transportierten Lenk- und Antriebseinheiten 1 verdoppeln.

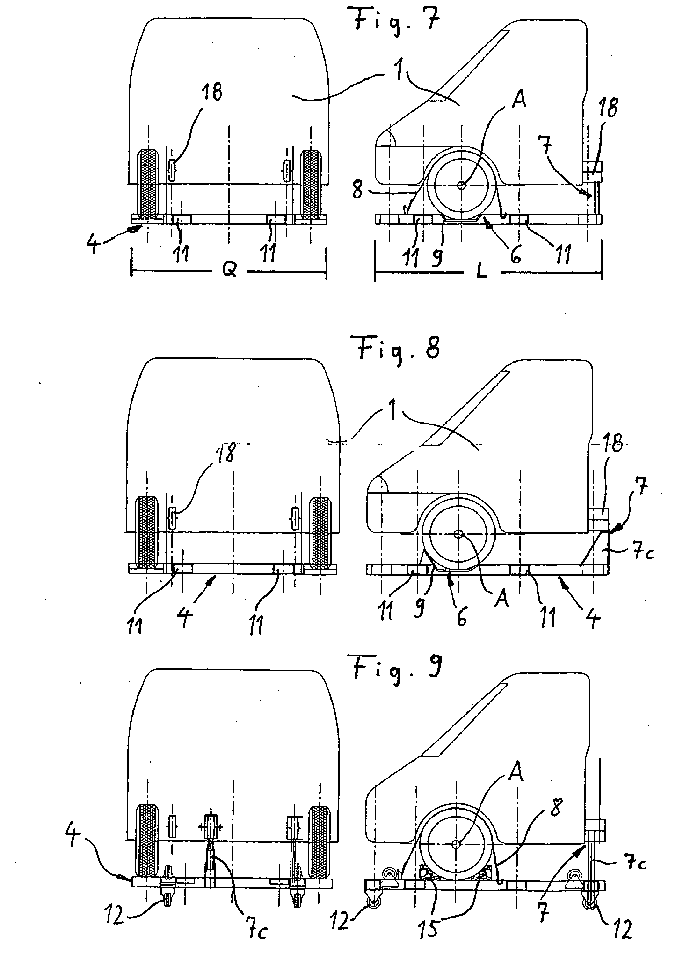

Die Fign. 7 bis 9 zeigen jeweils Transporthilfsmittel 4 in Form von rechteckigen flachen Transportpaletten mit einer Länge L von ca. 2,50 m und einer Breite Q, wobei L größer als Q ist. Jede Palette 4 besteht aus einem aus Profilen zusammengeschweißten, rechteckigen Rahmen und nimmt eine darauf abgesetzte Lenk- und Antriebseinheit 1 auf. Auf der Ladefläche des Transportfahrzeuges 3 werden die Paletten so in Reihe hintereinander angeordnet, daß sich ihre Längsränder L quer zur Fahrtrichtung erstrecken.

Wie Fig. 7 erkennen läßt, weist die Transportpalette 4 für die Transportzinken eines Gabelstaplers jeweils zwei Einschuböffnungen 11 an ihrem Längsrand L sowie ihrem Querrand Q auf, die symmetrisch zum Schwerpunkt der gemeinsam aus Transportpalette 4 und der Lenk- und Antriebseinheit 1 gebildeten Transporteinheit ausgerichtet sind.

In den Fign. 7 und 8 sind zwei verschiedene Ausgestaltungsformen von Sicherungselementen 6 dargestellt, die teilweise an der Palette 4 als zusätzliche Elemente ausgebildet sind. Eine an dem Längsrand L der Palette 4 ausgebildete Lagesicherung 9 in Form einer Vertiefung bzw. Mulde dient zur Aufnahme der Räder der Antriebsachse A. In der in Fig. 7 dargestellten Variante ist das Rad der Antriebsachse A zusätzlich zu der als Lagesicherung 9 dienenden Vertiefung mit einem die Lage der Antriebs- und Lenkeinheit zusätzlich sichernden Spanngurt 8 versehen, der auf beiden Seiten des Rades unter Spannung befestigt ist. Bei der in Fig. 8 dargestellten Variante ist die Mulde bzw. Ausnehmung 9 aussermittig angeordnet. Ein Spanngurt ist nicht vorgesehen.

In Fig. 9 ist zur Abstützung neben den Sicherungselementen 6 noch mindestens ein Abstützelement 7 c dargestellt, das natürlich auch bei den in den Fig. 7 und 8 dargestellten Ausführungsbeispielen verwendet werden kann. Die Abstützung 7 wird beim Ausführungsbeispiel durch eine vertikale kurze Stütze gebildet, die einerseits mit dem Längsträger 18 der Lenk- und Antriebseinheit 1 und andererseits mit der Palette 4 an deren hinterem Querrand Q verbunden ist. Die Sicherungselemente können zusätzlich zu dem Spanngurt 8 und anstelle der bereits anhand der Fign. 7 und 8 erläuterten Ausnehmung 9 zusätzliche, vor und hinter dem Rad der Antriebsachse A positionierte Keile 15 umfassen. Diese dienen dann ebenfalls der Lagesicherung der Lenk- und Antriebseinheit in Längsrichtung der Palette 4, d.h. in Richtung parallel zu den Längsrändern L.

Darüber hinaus sind in Fig. 9 Rollen 12 zu erkennen. Diese Rollen 12 sind zu Lager- und Kommissionierzwecken an der Unterseite der Transportpalette vorgesehen, und ermöglichen es dem Lagerpersonal, eine mit einer Antriebs- und Lenkeinheit 1 versehene Palette 4 (trotz ihres erheblichen Gewichtes) von Hand zu rollen. Um ein Rollen auch entlang nicht geradlinig verlaufender Transportwege zu ermöglichen, ist ein Paar der sich gegenüberliegenden Paare von jeweils zwei Rollen 12 drehbar um seine vertikale Achse. Das andere Rollenpaar ist fest oder ebenfalls drehbar ausgeführt. Die Rollen 12 sind zudem aus ihrer Rollstellung in eine weitere, in Fig. 9 punktiert dargestellte zweite Stellung verschwenkbar, in welcher die Rollen 12 nicht in Kontakt mit dem Untergrund stehen. In dieser Stellung der Rollen 12 werden die Paletten 4 zum Weitertransport verladen.

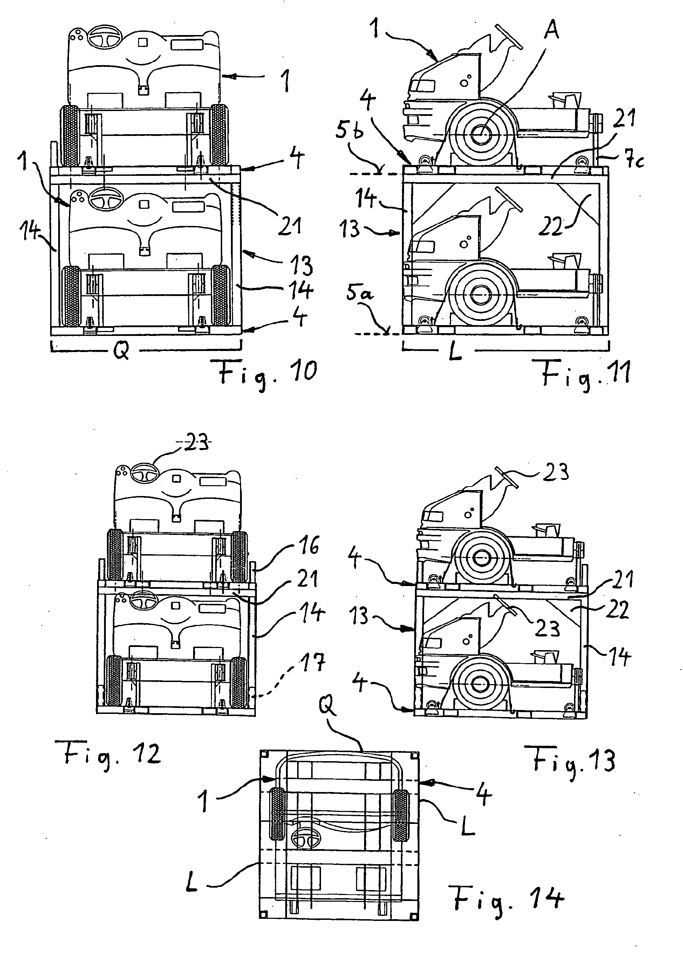

In den Fign. 10 und 11 ist eine Anordnung von Windlauf-Versionen der Lenk- und Antriebseinheiten 1 auf Paletten 4 unter Zwischenschaltung von stützenartigen Zwischenstücken 13 dargestellt. Die die oberen Paletten tragenden Zwischenstücke bestehen im wesentlichen aus den vier Stützen 14 sowie Verstrebungen 21 und Versteifungselementen 22 an der Oberseite der Stützen 14. Gemäß den Fign 12 bis 14 können die als Rohre ausgebildeten Stützen 14 auf Zapfen 16 an der unteren Palette 4 aufgesteckt sein, die in Ausnehmungen 17 der Stützen eingreifen. Die Einheiten 1 in der oberen Ebene können auch jeweils um 180° gedreht zu den unteren Einheiten 1 angeordnet werden, falls dies eine nochmals kompaktere Stapelung ermöglicht.

Gemäß Fig. 14 befinden sich die Stützen 14 an den Ecken der Palette, in deren Oberseite sie eingesteckt sind. Bei Nichtgebrauch der Stützen 14, wie z.B. für deren Rücktransport, lassen sie sich platzsparend in oder an der Palette 4 befestigen, die hierzu mit entsprechenden Aufnahmen versehen ist.

Die in den Fign. 12 bis 14 dargestellte Anordnung von Windlauf-Versionen unterscheidet sich von der in den Fign. 10 und 11 dargestellten dadurch, daß das den höchsten Punkt der Windlauf-Version bildende Lenkrad 23 zumindest teilweise in die obere Verstrebung 21 des Zwischenteils 13 eintaucht. Auch ist es zur vertikalen Platzausnutzung möglich die Transporthilfsmittel 4 derart zu gestalten, daß bei Windlauf-Versionen mit noch größerer Aufbauhöhe das Lenkrad 23 zumindest teilweise in die obere Palette 4 hineinreicht.

Bei den dargestellten Anordnungen zum Transport von Windlauf-Versionen einer Lenk- und Antriebseinheit sind die in der unteren und oberen Transportebene 5a, 5b transportierten Windlauf-Versionen stets mit gleicher Orientierung dargestellt. Um ein tieferes Eintauchen des Lenkrads 23 der unteren Windlauf-Version in die Transportpalette der oberen Windlauf-Version zu ermöglichen, können die Lenk- und Antriebseinheiten 1 der unteren und oberen Transportebene 5a, 5b auch eine um 180° gegeneinander verdrehte Ausrichtung aufweisen. Eine solche abwechselnde Anordnung ist auch aus Gründen der Gewichtsverteilung vorteilhaft, da hierdurch das Gewicht der Lenk- und Antriebseinheiten 1 gleichmäßig auf die rechts und links des Transportfahrzeugs 3 angeordneten Räder verteilt wird.

### Bezugszeichen

- 1: Lenk- und Antriebseinheit
- 2: Spezialkraftfahrzeug
- 3: Transportfahrzeug
- 4: Transportvorrichtung
- 5a: untere Transportebene
- 5b: obere Transportebene
- 6: Sicherungselemente
- 7: Abstützung
- 7 c: Stütze
- 8: Spanngurt
- 9: Lagesicherung
- 10: Grundplatte
- 11: Einschuböffnungen
- 12: Rollen
- 13: Zwischenteil
- 14: Stütze
- 15: Keil
- 16: Zapfen
- 17: Ausnehmung
- 18: Längsträger
- 19: Aufbauplattform
- 20: Hinterachse
- 21: Verstrebung
- 22: Versteifungselement
- 23: Lenkrad

- F: Fahrtrichtung
- A: Antriebsachse
- L: Längsrand der Palette
- Q: Querrand der Palette

## Patentansprüche

1. Verfahren zum Transport von Lenk- und Antriebseinheiten (1) frontgetriebener Spezialkraftfahrzeuge (2) auf einem gemeinsamen Transportfahrzeug (3), **gekennzeichnet durch**
- Absetzen jeweils einer Lenk- und Antriebseinheit (1) auf einem Transporthilfsmittel (4) in Gestalt einer mit ersten und zweiten Abstützungen versehenen, rechteckigen Palette mit zwei Längs- (L) und zwei Querrändern (Q) derart, dass die ersten Abstützungen, jeweils an den Längsrändern (L) der Palette angeordnet, die Antriebsachse (A) der Lenk- und Antriebseinheit (1) stützen, und eine zusätzliche Abstützung **durch** eine in Palettenlängsrichtung zur ersten Abstützung beabstandete zweite Abstützung (7) erfolgt,
- Anordnen der beladenen Paletten auf dem gemeinsamen Transportfahrzeug (3) in solcher Anordnung, dass sich die Paletten einer Transportebene ausschließlich hintereinander auf der Transportebene des Transportfahrzeuges (3) befinden, und sich ihre Längsränder (L) quer zur Transportrichtung (F) erstrecken.

2. Verfahren nach Anspruch 1, **dadurch gekennzeichnet, dass** die Lenk- und Antriebseinheiten (1) über Sicherungselemente (6) sowie die zweite Abstützung (7) auf den Transporthilfsmitteln (4) gegen z.B. Rutschen oder Verkippen gesichert werden.

3. Verfahren nach einem der Ansprüche 1 oder 2, **dadurch gekennzeichnet, dass** zum Be- und Entladen des Transportfahrzeuges (3) die Lenk- und Antriebseinheiten (1) in im wesentlichen quer zur Fahrtrichtung (F) des Transportfahrzeugs (3) verlaufender Richtung auf eine Transportebene (5) des Transportfahrzeugs (3) bzw. davon herunter befördert werden.

4. Verfahren nach Anspruch 3, **dadurch gekennzeichnet, dass** die Lenk- und Antriebseinheiten (1) durch die Transporthilfsmittel (4) zumindest teilweise untergreifende Gabelstapler auf die Transportebene (5a, 5b) bzw. davon herunter befördert werden.

5. Verfahren nach einem der vorangehenden Ansprüche, **dadurch gekennzeichnet, dass** die Lenk- und Antriebseinheiten (1) in einer unteren (5a) sowie maximal einer weiteren, oberen Transportebene (5b) transportiert werden.

6. Verfahren nach Anspruch 5, **dadurch gekennzeichnet, dass** die untere Transportebene (5a) durch die Ladefläche des Transportfahrzeugs (3) gebildet wird.

7. Verfahren nach Anspruch 5 oder 6, **dadurch gekennzeichnet, dass** die obere Transportebene (5b) durch auf die Transporthilfsmittel (4) der unteren Transportebene (5) aufsetzbare Zwischenteile (13) gebildet wird.

8. Verfahren nach einem der vorangehenden Ansprüche, **dadurch gekennzeichnet, dass** aufeinander folgende Lenk- und Antriebseinheiten um 180° gedreht zueinander transportiert werden.

9. Anordnung von Transporthilfsmitteln zum Transport mehrerer Gegenstände auf einem gemeinsamen Transportfahrzeug (3), wobei die einzelnen Transporthilfsmittel (4) rechteckige Paletten mit zwei Längs- (L) und zwei Querrändern (Q) sind,
**dadurch gekennzeichnet,**
**dass** für den Transport von Lenk- und Antriebseinheiten (1) frontgetriebener Spezialkraftfahrzeuge (2) die Paletten einer Transportebene ausschließlich hintereinander auf der Transportebene (5a, 5b) des Transportfahrzeuges (3) angeordnet sind, wobei sich ihre Längsränder (L) quer zur Transportrichtung (F) erstrecken, und dass jede Palette mit ersten und zweiten Abstützungen versehen ist, wobei die ersten Abstützungen, jeweils an den Längsrändern (L) der Palette angeordnet, die Antriebsachse (A) der Lenk- und Antriebseinheit (1) stützen, und die zweite Abstützung (7) eine zusätzliche, in Palettenlängsrichtung zur ersten Abstützung beabstandete Abstützung ist.

10. Anordnung nach Anspruch 9, **gekennzeichnet durch** an der Palette (10) ausgebildete Sicherungselemente (6) und Einschuböffnungen (11) für z.B. Gabelstapler.

11. Anordnung nach Anspruch 9 und 10, **dadurch gekennzeichnet, dass** die Sicherungselemente (6) Bewegungen der Lenk- und Antriebseinheit (1) parallel zu den Längsrändern (L) verhindern.

12. Anordnung nach Anspruch 11, **dadurch gekennzeichnet, dass** die Sicherungselemente (6) einen Spanngurt (8) sowie mindestens eine Lagesicherung (9) umfassen.

13. Anordnung nach Anspruch 12, **dadurch gekennzeichnet, dass** die Lagesicherung (9) durch eine Vertiefung im Bereich des Längsrandes (L) der Palette (10) oder durch zusätzliche Keile (15) gebildet wird.

14. Anordnung nach Anspruch 9 und 10, **dadurch gekennzeichnet, dass** die zusätzliche Abstützung (7) durch eine starre, sowohl mit der Lenk- und Antriebseinheit (1) wie auch mit der Palette (10) verbundene Stütze (7 c) gebildet wird, auf der sich die Lenk- und Antriebseinheit (1) mit ihrem rückwärtigen Ende abstützt.

15. Anordnung nach einem der Ansprüche 9 bis 14, **dadurch gekennzeichnet, dass** die Palette (10) mit Rollen (12) versehen ist.

16. Anordnung nach Anspruch 15, **dadurch gekennzeichnet, dass** die Rollen (12) zwischen einer Rollstellung und mindestens einer weiteren Stellung verschwenkbar sind, in welcher die Rollen gegenüber dem Untergrund kraftlos stehen.

17. Anordnung nach einem der Ansprüche 10 bis 16, **dadurch gekennzeichnet, dass** die Palette (10) mit zwei deren Querränder (Q) durchsetzenden Einschuböffnungen (11) versehen ist, in welche die Gabel eines Gabelstaplers einschiebbar ist.

18. Anordnung nach einem der Ansprüche 10 bis 17, **dadurch gekennzeichnet, dass** die Palette (10) mit zwei deren Längsränder (L) durchsetzenden Einschuböffnungen (11) versehen ist, in welche die Gabel eines Gabelstaplers einschiebbar ist.

19. Anordnung nach einem der Ansprüche 17 und 18, **dadurch gekennzeichnet, dass** sich die Einschuböffnungen (11) im Wesentlichen symmetrisch zu beiden Seiten des Schwerpunkts des aus Transporthilfsmittel (4) sowie Lenk- und Antriebseinheit (1) zusammengesetzten Körpers erstrecken.

20. Anordnung nach einem der Ansprüche 9 bis 19, **dadurch gekennzeichnet, dass** durch Aufsetzen eines im Wesentlichen aus vier Stützen (14) bestehenden Zwischenteils (13) eine obere Transportebene (5b) zur Aufnahme weiterer, gleichartiger Transporthilfsmittel (4) gebildet wird.

21. Anordnung nach Anspruch 20, **dadurch gekennzeichnet, dass** das Zwischenteil (13) mit Ausnehmungen (16) versehen ist, die mit Vorsprüngen (17) der Transporthilfsmittel (4) korrespondieren.

22. Anordnung nach einem der Ansprüche 9 bis 21, **dadurch gekennzeichnet, dass** hinter- oder übereinander folgende Transporthilfsmittel (4) um 180° zueinander verdreht angeordnet sind.

## Claims

1. Method for transporting steering and drive units
(1) of front-wheel-drive special-purpose motor vehicles (2) on a common transport vehicle (3),
**characterized by**
- placing in each case one steering and drive unit (1) on a transport means (4) in the form of a rectangular pallet, which is provided with first and second supports and which has two longitudinal edges (L) and two transverse edges (Q), in such a way that the first supports, arranged in each case at the longitudinal edges (L) of the pallet, support the drive axle (A) of the steering and drive unit (1), and an additional support is provided by means of a second support (7) which is spaced apart from the first support in the pallet longitudinal direction,
- arranging the laden pallets on the common transport vehicle (3) in such an arrangement that the pallets of a transport plane are situated exclusively one behind the other on the transport plane of the transport vehicle (3), and the longitudinal edges (L) of said pallets extend transversely with respect to the transport direction (F).

2. Method according to Claim 1, **characterized in that** the steering and drive units (1) are secured, so as to be prevented from for example slipping or tilting, by means of securing elements (6) and the second support (7) on the transport means (4).

3. Method according to one of Claims 1 or 2,
**characterized in that,** for loading and unloading the transport vehicle (3), the steering and drive units (1) are conveyed onto and off a transport plane (5) of the transport vehicle (3) in a direction which runs substantially transversely with respect to the direction of travel (F) of the transport vehicle (3).

4. Method according to Claim 3, **characterized in that** the steering and drive units (1) are conveyed onto and off the transport plane (5a, 5b) by means of forklift trucks which engage at least partially under the transport means (4).

5. Method according to one of the preceding claims, **characterized in that** the steering and drive units (1) are transported in a lower transport plane (5a) and a maximum of one further, upper transport plane (5b).

6. Method according to Claim 5, **characterized in that** the lower transport plane (5a) is formed by the loading surface of the transport vehicle (3).

7. Method according to Claim 5 or 6, **characterized in that** the upper transport plane (5b) is formed by intermediate parts (13) which can be placed onto the transport means (4) of the lower transport plane (5).

8. Method according to one of the preceding claims, **characterized in that** successive steering and drive units are transported in an arrangement rotated relative to one another by 180°.

9. Arrangement of transport means for transporting a plurality of objects on a common transport vehicle (3), with the individual transport means (4) being rectangular pallets having two longitudinal edges (L) and two transverse edges (Q),
**characterized**
**in that,** for transporting steering and drive units (1) of front-wheel-drive special-purpose motor vehicles (2), the pallets of a transport plane are arranged exclusively one behind the other on the transport plane (5a, 5b) of the transport vehicle (3), with the longitudinal edges (L) of said pallets extending transversely with respect to the transport direction (F), and in that each pallet is provided with first and second supports, with the first supports, arranged in each case at the longitudinal edges (L) of the pallet, supporting the drive axle (A) of the steering and drive unit (1), and with the second support (7) being an additional support which is spaced apart from the first support in the pallet longitudinal direction.

10. Arrangement according to Claim 9, **characterized by** securing elements (6) and insertion openings (11) which are formed on the pallet (10) for, for example, forklift trucks.

11. Arrangement according to Claim 9 and 10,
**characterized in that** the securing elements (6) prevent movements of the steering and drive unit (1) parallel to the longitudinal edges (L).

12. Arrangement according to Claim 11, **characterized**
**in that** the securing elements (6) comprise a tensioning belt (8) and at least one positioning device (9).

13. Arrangement according to Claim 12, **characterized**
**in that** the positioning device (9) is formed by a depression in the region of the longitudinal edge (L) of the pallet (10) or by additional wedges (15).

14. Arrangement according to Claim 9 and 10,
**characterized in that** the additional support (7) is formed by a rigid stand (7 c) which is connected both to the steering and drive unit (1) and also to the pallet (10) and on which the steering and drive unit (1) is supported with its rear end.

15. Arrangement according to one of Claims 9 to 14, **characterized in that** the pallet (10) is provided with rollers (12).

16. Arrangement according to Claim 15, **characterized**
**in that** the rollers (12) can be pivoted between a rolling position and at least one further position in which the rollers transmit no force with respect to the underlying surface.

17. Arrangement according to one of Claims 10 to 16, **characterized in that** the pallet (10) is provided with two insertion openings (11) which extend through the transverse edges (Q) of said pallet (10) and into which the fork of a forklift truck can be inserted.

18. Arrangement according to one of Claims 10 to 17, **characterized in that** the pallet (10) is provided with two insertion openings (11) which extend through the longitudinal edges (L) of said pallet (10) and into which the fork of a forklift truck can be inserted.

19. Arrangement according to one of Claims 17 and 18, **characterized in that** the insertion openings (11) extend substantially symmetrically to both sides of the centre of gravity of the body composed of transport means (4) and steering and drive unit (1).

20. Arrangement according to one of Claims 9 to 19, **characterized in that,** by placing on an intermediate part (13), which is composed substantially of four stands (14), an upper transport plane (5b) for holding further similar transport means (4) is formed.

21. Arrangement according to Claim 20, **characterized**
**in that** the intermediate part (13) is provided with recesses (16) which correspond to projections (17) of the transport means (4).

22. Arrangement according to one of Claims 9 to 21, **characterized in that** transport means (4) arranged in succession one behind the other or one above the other are arranged rotated relative to one another by 180°.

## Revendications

1. Procédé pour le transport d'unités de direction et d'entraînement (1) de véhicules automobiles spéciaux à traction avant (2) sur un véhicule de transport commun (3), **caractérisé par** les étapes constituant à :
- déposer une unité de direction et d'entraînement respective (1) sur un moyen de transport auxiliaire (4) sous forme de palette rectangulaire pourvue de premiers et deuxièmes supports, avec deux bords longitudinaux (L) et deux bords transversaux (Q), de telle sorte que les premiers supports, à chaque fois disposés sur les bords longitudinaux (L) de la palette, supportent l'arbre primaire (A) de l'unité de direction et d'entraînement (1), et qu'un support supplémentaire soit réalisé par un deuxième support (7) espacé du premier support dans la direction longitudinale de la palette,
- disposer les palettes chargées sur le véhicule de transport commun (3) suivant un agencement tel que les palettes d'un plan de transport se trouvent exclusivement les unes derrière les autres sur le plan de transport du véhicule de transport (3), et que leurs bords longitudinaux (L) s'étendent transversalement à la direction de transport (F).

2. Procédé selon la revendication 1, **caractérisé en ce que** les unités de direction et d'entraînement (1) sont fixées par le biais d'éléments de fixation (6) et par le deuxième support (7) sur les moyens de transport (4) pour empêcher par exemple un glissement ou un basculement.

3. Procédé selon l'une quelconque des revendications 1 ou 2, **caractérisé en ce que** pour charger et décharger le véhicule de transport (3), les unités de direction et d'entraînement (1) sont transportées dans la direction essentiellement transversale à la direction de transport (F) du véhicule de transport (3), sur un plan de transport (5) du véhicule de transport (3) ou en dessous de celui-ci.

4. Procédé selon la revendication 3, **caractérisé en ce que** les unités de direction et d'entraînement (1) sont transportées par des chariots élévateurs à fourche venant en prise par le dessous, au moins en partie, avec les moyens de transport auxiliaires (4), sur le plan de transport (5a, 5b) ou en dessous de celui-ci.

5. Procédé selon l'une quelconque des revendications précédentes, **caractérisé en ce que** les unités de direction et d'entraînement (1) sont transportées dans un plan de transport inférieur (5a) et au maximum dans un autre plan de transport supérieur (5b).

6. Procédé selon la revendication 5, **caractérisé en ce que** le plan de transport inférieur (5a) est formé par la surface de chargement du véhicule de transport (3).

7. Procédé selon la revendication 5 ou 6, **caractérisé en ce que** le plan de transport supérieur (5b) est formé par des pièces intermédiaires (13) pouvant être posées sur les moyens de transport auxiliaires (4) du plan de transport inférieur (5).

8. Procédé selon l'une quelconque des revendications précédentes, **caractérisé en ce que** des unités de direction et d'entraînement successives sont transportées de manière tournée de 180° les unes par rapport aux autres.

9. Agencement de moyens de transport auxiliaires pour le transport de plusieurs objets sur un véhicule de transport commun (3), dans lequel les moyens de transport auxiliaires individuels (4) sont des palettes rectangulaires ayant deux bords longitudinaux (L) et deux bords transversaux (Q),
**caractérisé en ce que**
pour le transport d'unités de direction et d'entraînement (1) de véhicules automobiles spéciaux à traction avant (2), les palettes d'un plan de transport sont disposées exclusivement les unes derrière les autres sur le plan de transport (5a, 5b) du véhicule de transport (3), leurs bords longitudinaux (L) s'étendant transversalement à la direction de transport (F), et **en ce que** chaque palette est pourvue de premiers et de deuxièmes supports, les premiers supports, à chaque fois disposés sur les bords longitudinaux (L) de la palette, supportant l'arbre primaire (A) de l'unité de direction et d'entraînement (1), et le deuxième support (7) étant un support supplémentaire espacé du premier support dans la direction longitudinale de la palette.

10. Agencement selon la revendication 9, **caractérisé par** des éléments de fixation (6) et des ouvertures d'enfoncement (11), pour des chariots élévateurs à fourche, par exemple, réalisés sur la palette (10).

11. Agencement selon la revendication 9 et 10,
**caractérisé en ce que** les éléments de fixation (6) empêchent des mouvements de l'unité de direction et d'entraînement (1) parallèlement aux bords longitudinaux (L).

12. Agencement selon la revendication 11, **caractérisé en ce que** les éléments de fixation (6) comprennent une courroie de serrage (8) ainsi qu'au moins une fixation en position (9).

13. Agencement selon la revendication 12, **caractérisé en ce que** la fixation en position (9) est formée par un renfoncement dans la région du bord longitudinal (L) de la palette (10) ou par des coins supplémentaires (15).

14. Agencement selon les revendications 9 et 10,
**caractérisé en ce que** le support supplémentaire (7) est formé par un appui (7c) rigide, connecté à la fois à l'unité de direction et d'entraînement (1) et à la palette (10), sur lequel s'appuie l'unité de direction et d'entraînement (1) avec son extrémité arrière.

15. Agencement selon l'une quelconque des revendications 9 à 14, **caractérisé en ce que** la palette (10) est pourvue de rouleaux (12).

16. Agencement selon la revendication 15, **caractérisé en ce que** les rouleaux (12) peuvent pivoter entre une position de roulement et au moins une autre position dans laquelle les rouleaux reposent sans force par rapport au subjectile.

17. Agencement selon l'une quelconque des revendications 10 à 16, **caractérisé en ce que** la palette (10) est pourvue de deux ouvertures d'enfoncement (11) traversant ses bords transversaux (Q), dans laquelle la fourche d'un chariot élévateur à fourche peut être insérée.

18. Agencement selon l'une quelconque des revendications 10 à 17, **caractérisé en ce que** la palette (10) est pourvue de deux ouvertures d'enfoncement (11) traversant ses bords longitudinaux (L), dans lesquelles la fourche d'un chariot élévateur à fourche peut être insérée.

19. Agencement selon l'une quelconque des revendications 17 et 18, **caractérisé en ce que** les ouvertures d'enfoncement (11) s'étendent essentiellement symétriquement par rapport aux deux côtés du centre de gravité du corps constitué des moyens de transport auxiliaires (4) ainsi que de l'unité de direction et d'entraînement (1).

20. Agencement selon l'une quelconque des revendications 9 à 19, **caractérisé en ce qu'**en posant une pièce intermédiaire (13) constituée essentiellement de quatre appuis (14), on forme un plan de transport supérieur (5b) pour recevoir d'autres moyens de transport auxiliaires (4) de même type.

21. Agencement selon la revendication 20, **caractérisé en ce que** la pièce intermédiaire (13) est pourvue d'évidements (16) qui correspondent à des saillies (17) des moyens de transport auxiliaires (4).

22. Agencement selon l'une quelconque des revendications 9 à 21, **caractérisé en ce que** des moyens de transport auxiliaires (4) se suivant les uns au-dessus des autres ou les uns derrière les autres sont disposés de manière tournée de 180° les uns par rapport aux autres.
